(19) Europäisches Patentamt / European Patent Office / Office européen des brevets

(11) **EP 3 672 109 B1**

(12) **FASCICULE DE BREVET EUROPEEN**

(45) Date de publication et mention
de la délivrance du brevet:
**16.02.2022 Bulletin 2022/07**

(21) Numéro de dépôt: **19215128.0**

(22) Date de dépôt: **11.12.2019**

(51) Classification Internationale des Brevets (IPC):
**H04B 10/112** *(2013.01)* **H04B 10/67** *(2013.01)*

(52) Classification Coopérative des Brevets (CPC):
**H04B 10/112; H04B 10/67**

(54) **DISPOSITIF ET SYSTÈME DE RECOMBINAISON COHÉRENTE DE FAISCEAUX OPTIQUES MULTI-LONGUEUR D'ONDE**

VORRICHTUNG UND SYSTEM ZUR KOHÄRENTEN REKOMBINATION VON OPTISCHEN FASERN MIT MEHREREN WELLENLÄNGEN

DEVICE AND SYSTEM FOR COHERENT RECOMBINATION FOR MULTI-WAVELENGTH OPTICAL BEAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2018 FR 1872955**

(43) Date de publication de la demande:
**24.06.2020 Bulletin 2020/26**

(73) Titulaire: **Thales**
**92400 Courbevoie (FR)**

(72) Inventeurs:
• **BOURDERIONNET, Jérôme**
**91767 PALAISEAU (FR)**
• **BRIGNON, Arnaud**
**91767 PALAISEAU (FR)**
• **LE KERNEC, Arnaud**
**31100 TOULOUSE (FR)**
• **SOTOM, Michel**
**31037 TOULOUSE Cedex 1 (FR)**
• **MAHO, Anaëlle**
**31300 TOULOUSE (FR)**

(74) Mandataire: **Marks & Clerk France**
**Immeuble "Visium"**
**22, avenue Aristide Briand**
**94117 Arcueil Cedex (FR)**

(56) Documents cités:
**WO-A1-2017/162853 US-B2- 7 974 543**

**Description**

**DOMAINE DE L'INVENTION**

L'invention concerne le domaine des communications optiques selon un canal de propagation multimode spatial. C'est notamment le cas en espace libre, où le front de phase de l'onde vecteur de l'information est plus ou moins fortement distordu par la traversée d'un milieu perturbé, tel une couche atmosphérique dans une liaison terre-satellite. Selon un autre exemple, une propagation dans une fibre multimode induit une perturbation du faisceau par couplage entre les modes spatiaux.

Plus particulièrement l'invention concerne un dispositif et un système de réception et le cas échéant de réception/émission basés sur la recombinaison (le cas échéant séparation) cohérente de faisceaux optiques multi-longueur d'onde.

**ETAT DE LA TECHNIQUE**

Le problème à résoudre, lorsque le front de phase d'un faisceau optique porteur d'information est distordu par une traversée en espace libre, est de maintenir un bilan de liaison optimal en dépit de ces perturbations.

Une première solution est l'utilisation d'une optique adaptative (ex. miroir déformable) pour compenser la distorsion du front d'onde optique et optimiser typiquement l'injection optique dans une fibre monomode reliée au détecteur. Cette approche a l'avantage de traiter la pupille dans son ensemble, de permettre de traiter les cas émission (pré-compensation) et réception, et d'être large bande (application WDM possible). En revanche, les boucles d'optique adaptative sont limitées en rapidité (ms dans le meilleur des cas) ce qui peut s'avérer insuffisant pour des perturbations atmosphériques de bande passante de l'ordre ou supérieur à 1 kHz.

Une deuxième solution consiste à utiliser un télescope multi-ouvertures, dans une architecture dite à diversité spatiale. Chaque « sous-télescope » reçoit une portion du faisceau incident, et le principe de la méthode est de supposer que la diversité spatiale permet de se prémunir des extinctions spatiales dues aux interférences (speckle). Quelle que soit la turbulence, au moins un sous télescope collectera un signal non nul. Les signaux des détecteurs placés en aval de chaque télescope sont sommés électriquement (de manière incohérente). L'inconvénient principal de cette méthode est de nécessiter autant de détecteurs que de sous télescope, les bruits de chaque détecteur étant sommés. Cette méthode ne permet pas d'améliorer le rapport signal/bruit de la liaison.

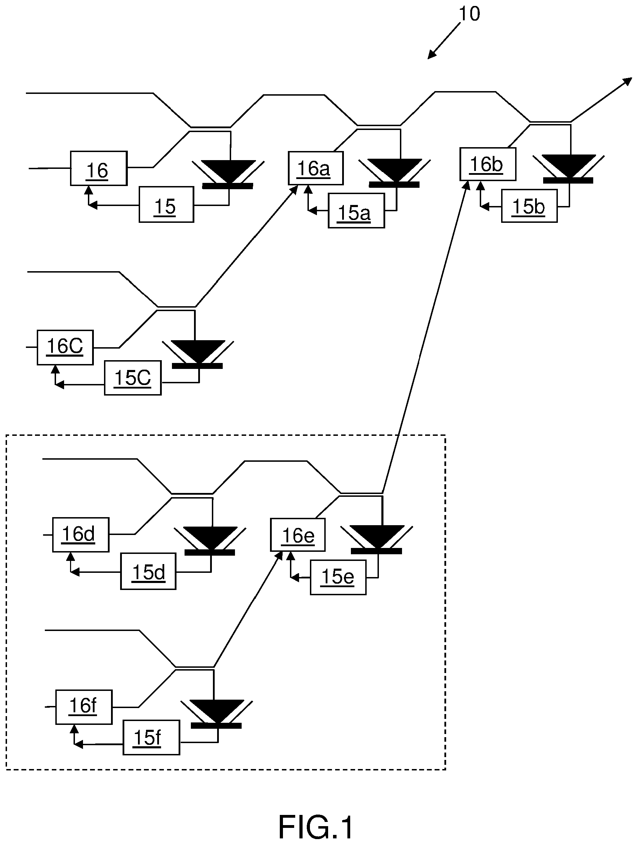

Dans une troisième solution décrite dans le document US7974543 il est proposé un système de réception basé sur la recombinaison cohérentes de faisceaux élémentaires/modes. Le système comprend une matrice de microlentilles pour échantillonner le faisceau incident couplée à un dispositif de recombinaison cohérente 10 présentant $2^M$ faisceaux à recombiner et constitué d'une pluralité de dispositifs élémentaires de recombinaison 2x1 agencés en cascade, tel qu'illustré figure 1. Chaque dispositif élémentaire est constitué de deux entrées, 1 et 2, 3 et 4 par exemple, correspondant à 2 faisceaux à recombiner, d'un déphaseur 16 disposé sur le trajet d'un des faisceaux, d'un coupleur 2x2 11 dont une sortie 12 est détectée par un détecteur 13. Le signal détecté par 13 est minimisé à l'aide d'une électronique 15 (15a, 15b ...) permettant d'appliquer au déphaseur 16 (16a, 16b, ...) un déphasage au faisceau 2 de sorte qu'une interférence constructive se produise sur la deuxième sortie 17 du coupleur 11.

La sortie finale 18 combine en un seul faisceau l'ensemble des $2^M$ faisceaux initiaux. Un signal 18 maximal est recherché.

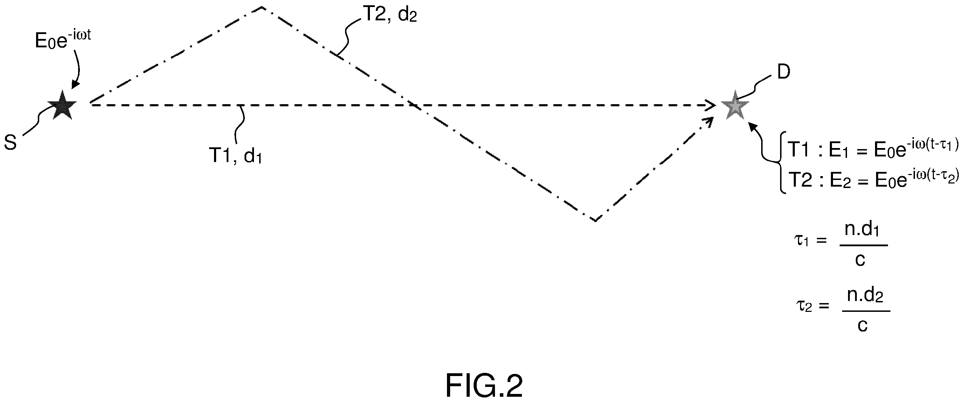

Une limitation de ce type de système est l'utilisation d'un déphasage (composant 16) qui limite la largeur de la bande spectrale du faisceau incident que le système peut traiter, comme illustré figure 2. En outre l'utilisation d'un élément unique ne permet pas d'égaliser à la fois les amplitudes et les phases des deux signaux à recombiner, pour l'obtention une efficacité optimale.

Dans la figure 2 on considère la situation suivante : un champ $E_0$ est émis d'un point source S, et suit 2 trajets différents T1 et T2 pour atteindre un détecteur D. Le premier trajet T1 a une longueur $L_1$, et le second trajet T2 a une longueur $L_2$. On considère pour simplifier que le milieu séparant la source S du détecteur D est non dispersif, c'est-à-dire que son indice de réfraction ne dépend pas de la longueur d'onde. Dans un même souci de clarté, on considère que les 2 trajets ont la même atténuation, et donc que les champs incidents sur le détecteur auront la même intensité, qu'ils aient suivi le trajet T1 ou le trajet T2. L'expression du champ au niveau du détecteur est donc :

$$E_{DET} = E_{trajet\,1} + E_{trajet\,2}$$

$$E_{DET} = E_0(t - \tau_1) + E_0(t - \tau_2)$$

Où $\tau_1$ et $\tau_2$ sont respectivement les temps mis par la lumière pour parcourir les trajets T1 et T2 soit :

$$\tau_{1\,(resp\,2)} = \frac{n \times L_{1\,(resp\,2)}}{c}$$

On s'intéresse maintenant au cas où $E_0$ a un certain contenu spectral (par exemple des bandes latérales de modulation, ou encore si $E_0$ est constitué d'un peigne de fréquences WDM). La composante du spectre du signal électrique issu du détecteur à une fréquence $\omega$ est donc :

$$\begin{aligned} i_{DET}(\omega) &= \left[E_0(\omega, t-\tau_1) + E_0(\omega, t-\tau_2)\right] \times c.c. \\ &= \left[\widetilde{E_0}e^{-i\omega(t-\tau_1)} + \widetilde{E_0}e^{-i\omega(t-\tau_2)}\right] \times c.c. \\ &= 2\widetilde{E_0}\widetilde{E_0}^* \times \left(1 + \frac{\cos\omega(\tau_1-\tau_2)}{2}\right) \end{aligned}$$

On suppose maintenant que l'on a un moyen de contrôle de la différence de phase optique entre les champs issus des trajets 1 et 2 (du type du déphaseur 16 du document précité). On peut donc écrire le champ sur le détecteur comme :

$$E_{DET} = E_0(t-\tau_1) \times e^{-i\varphi} + E_0(t-\tau_2)$$

Où $\varphi$ est ajustable, dans le but de maximiser le signal reçu. Le signal $i_{DET}$ à la fréquence $\omega$ vaut maintenant :

$$\begin{aligned} i_{DET}(\omega) &= \left[\widetilde{E_0}e^{-i[\omega(t-\tau_1)+\varphi]} + \widetilde{E_0}e^{-i\omega(t-\tau_2)}\right] \times c.c. \\ &= 2\widetilde{E_0}\widetilde{E_0}^* \times \left(1 + \frac{\cos[\omega(\tau_1-\tau_2)+\varphi]}{2}\right) \end{aligned}$$

Maximiser le signal reçu implique la condition :

$$\cos[\omega(\tau_1-\tau_2)+\varphi] = 1$$

Soit

$$\varphi = \omega(\tau_2-\tau_1) + k2\pi$$

On voit donc que cette condition dépend de la fréquence considérée $\omega$, et qu'elle ne pourra s'appliquer qu'au voisinage proche de cette fréquence, pour des applications à une seule porteuse optique notamment (WDM exclus). Typiquement, pour les modulateurs de phase on a une excursion de 1 à 2x $\lambda$, pour des composants typiquement millimétriques et des matériaux de variation d'indice de l'ordre de $10^{-3}$, correspondant à des déphasages de l'ordre du micron.

De plus, dans le cas d'une architecture en émission/réception, les lasers des systèmes émetteurs et récepteurs devront avoir des fréquences optiques proches mais pas identiques (typiquement quelques nm d'écart), ce qui peut être un inconvénient significatif dans le cas d'un système embarqué sur satellite par exemple, ou pour faire face au vieillissement des diodes laser.

Un but de la présente invention est de palier les inconvénients précités en proposant un dispositif élémentaire de recombinaison permettant une recombinaison cohérente large bande spectrale, permettant de ce fait la mise en oeuvre d'un système de réception (et le cas échéant réception/émission) large bande, compatible d'une architecture WDM.

## DESCRIPTION DE L'INVENTION

La présente invention a pour objet un dispositif selon la revendication 1, un système de réception selon les revendications 2 à 6 ainsi que un système de réception/émission selon les revendications 7 et 8.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1 déjà citée décrit un système de réception basé sur la recombinaison cohérentes de faisceaux élémentaires/modes selon l'état de la technique.

La figure 2 déjà citée décrit une situation dans laquelle un champ E0 est émis d'un point source S, et suit 2 trajets différents T1 et T2 pour atteindre un détecteur D.

La figure 3 illustre un dispositif élémentaire de recombinaison cohérente selon l'invention.

La figure 4 illustre l'efficacité de combinaison optimale par canal WDM en fonction de la valeur du retard résiduel exprimé en multiple de la longueur d'onde.

La figure 5 illustre l'intensité détectée par le détecteur en fonction de la phase et pour chaque canal à l'optimisation, dans le cas d'un retard résiduel égal à $10\times\lambda$.

La figure 6 illustre l'intensité détectée par le détecteur en fonction de la phase et pour chaque canal à l'optimisation, dans le cas d'un retard résiduel égal à $35\times\lambda$.

La figure 7 illustre un dispositif de recombinaison cohérente selon l'invention comprenant une pluralité de dispositifs élémentaires agencé en cascade permettant d'obtenir un faisceau recombiné unique.

La figure 8 illustre un système de réception selon l'invention utilisant un dispositif de recombinaison cohérente.

La figure 9 illustre un premier mode de réalisation d'un système de réception/émission selon l'invention.

La figure 10 illustre un deuxième mode de réalisation d'un système de réception/émission selon l'invention.

Par souci de clarté les mêmes éléments porteront les mêmes repères dans les différentes figures.

## DESCRIPTION DETAILLEE DE L'INVENTION

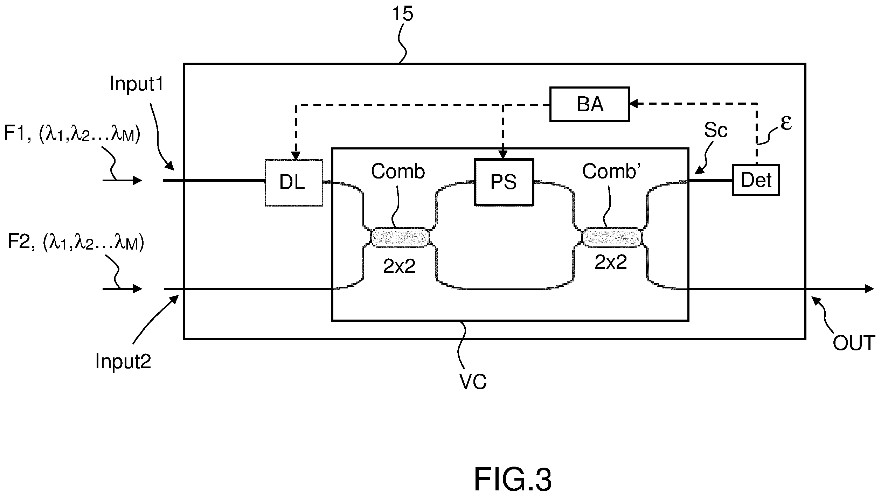

Le dispositif élémentaire de recombinaison cohérente 15 selon l'invention est illustré figure 3.

Il recombine un premier faisceau élémentaire F1 et un deuxième faisceau élémentaire F2 obtenus à partir de l'échantillonnage d'un faisceau incident Fid ayant subi une distorsion, typiquement par propagation en espace libre dans des couches de l'atmosphère, ou lors du passage dans une fibre multimode avec un faible taux de dépolarisation. Du fait de la distorsion les faisceaux F1 et F2 ont une amplitude et une phase différentes.

Soit $I_0$ l'intensité du faisceau incident Fid, I1 l'intensité de F1 et I2 l'intensité de F2, avec I1 = p1.$I_0$ et I2 = p2.$I_0$

Le spectre de Fid est large (bande ou peigne de fréquence) et comprend au moins M longueurs d'ondes $\lambda_1$, $\lambda_2$,..$\lambda_M$ (M au moins égal à 2) constituant chacune un canal de transport de l'information (architecture WDM par exmeple).

Le dispositif élémentaire 15 selon l'invention présente une architecture de même type que celle décrite dans le document US7974543 mais avec deux niveaux d'égalisation. Il comprend une première entrée Input1 et une deuxième Input2 entrée dans lesquelles sont respectivement injectés F1 et F2 à recombiner et une sortie Out délivrant un faisceau de sortie correspondant à la recombinaison cohérente du premier et du deuxième faisceau élémentaire, que l'on cherche à maximiser (interférences constructives).

Un premier étage agit sur le retard $R_{12}$ entre les deux faisceaux élémentaires F1 et F2 induit par la distorsion, ce qui permet de réaliser une compensation de phase absolue, indépendamment de la longueur d'onde, comme expliqué plus loin. Le dispositif élémentaire 15 comprend pour cela une ligne à retard DL disposée sur un des trajets des faisceaux élémentaires, trajet de F2 dans l'exemple, qui est configurée pour induire un retard variable sur ce trajet.

Un deuxième étage agit sur la différence d'amplitude entre les deux faisceaux. Le dispositif élémentaire 15 comprend pour cela un coupleur variable VC comprenant un premier combineur 2x2 Comb, un modulateur de phase PS et un deuxième combineur 2x2 Comb', selon une architecture en interféromètre Mach Zehnder ou MZI à 2 entrées et 2 sorties. PS peut être positionné indifféremment sur les 2 bras du MZI car F1 et F2 sont mélangés à la suite du premier combineur. Comme illustré figure 3, les entrées du premier combineur Comb sont les 2 faisceaux élémentaires, dont l'un a été retardé par la ligne à retard. Le modulateur de phase est disposé sur une des 2 sorties de Comb.

Le deuxième combineur Comb' présente une sortie principale constituant la sortie Out du dispositif élémentaire 15 et délivre le faisceau de sortie et une sortie complémentaire Sc délivrant un faisceau complémentaire du faisceau de sortie.

Un détecteur de contrôle Det est relié à la sortie complémentaire Sc. Le signal sur le détecteur de contrôle s'annule lorsque le coefficient de couplage du coupleur variable VC compense le ratio d'intensité $\rho_2/\rho_1$ et lorsque la ligne à retard DL compense le retard entre les deux faisceaux, soit le déphasage absolu entre les voies 1 et 2.

Ainsi le détecteur Det génère, à partir du faisceau complémentaire, un signal d'erreur $\varepsilon$ qui s'annule lorsque le modulateur de phase PS est configuré pour appliquer une différence de phase qui égalise les intensités respectives de F1 et F2, et lorsque la ligne à retard DL est configurée pour appliquer un retard qui compense le retard $R_{12}$ entre F1 et F2.

Enfin une boucle d'asservissement BA est configurée pour déterminer, à partir du signal d'erreur $\varepsilon$, le retard à appliquer via la ligne à retard et la différence de phase à appliquer via le modulateur de phase. L'ensemble détecteur/boucle d'asservissement agit sur DL et PS afin de minimiser le signal complémentaire et donc de maximiser le signal de sortie.

Le fait d'agir sur le retard entre les deux faisceaux F1 et F2 permet une recombinaison cohérente indépendante de la longueur d'onde.

Reprenons la situation de la figure 2. Dans le cas d'une compensation par un élément de retard entre les champs issus des trajets T1 et T2, l'expression du champ reçu par le détecteur est :

$$E_{DET} = E_0(t - \tau_1 - \tau) \times e^{-i\varphi} + E_0(t - \tau_2)$$

Où $\tau$ est un retard ajustable.

Le signal $i_{DET}$ à la fréquence $\omega$ vaut maintenant :

$$i_{DET}(\omega) = \left[ \widetilde{E_0} e^{-i\omega(t-\tau_1-\tau)} + \widetilde{E_0} e^{-i\omega(t-\tau_2)} \right] \times c.c.$$
$$= 2\widetilde{E_0}\widetilde{E_0}^* \times \left( 1 + \frac{\cos[\omega(\tau_1 - \tau_2 + \tau)]}{2} \right)$$

Maximiser le signal reçu implique à présent la condition :

$$\cos[\omega(\tau_1 - \tau_2 + \tau)] = 1$$

Soit

$$\tau = \tau_2 - \tau_1$$

On voit que cette fois, la condition d'optimisation ne dépend plus de la fréquence optique, ce qui permet l'optimisation du signal reçu quelle que soit la fréquence du laser, donc à fortiori pour un signal large bande, et/ou WDM, ou pour 2 lasers émetteur/récepteur de longueur d'onde éventuellement très éloignées.

Au niveau de la précision de compensation du retard, en télécommunication, le retard doit être compensé avec une précision, dénommée retard résiduel $\delta\tau$ (retard restant après la compensation), inférieure ou égale à une fraction du temps symbole, pour ne pas brouiller le signal transmis, le temps symbole étant défini par la durée d'un bit d'information, ou l'inverse de la fréquence de modulation (valable pour une seule longueur d'onde porteuse).

Pour un signal mono-$\lambda$ (canal) modulé à 10GHz, le temps symbole vaut 100ps. On demande donc un retard résiduel maximal typiquement de 10ps (1/10 du temps symbole) correspondant à un déphasage de 2000$\times\lambda$ à $\lambda$=1550nm (longueur d'onde télécom typiquement utilisée). Ce retard exprimé en multiple de la longueur d'onde est obtenu en calculant la distance parcourue par la lumière à la vitesse c=3$\times10^8$ m.s$^{-1}$ pendant un temps de 10ps, et en l'exprimant

$$\varphi = \frac{c\Delta t}{\lambda}$$

en multiple de la longueur d'onde, soit : .

En pratique, il y a 2 types de retard, les retards fixes ou statiques, qui proviennent des différences de longueur de fibres entre les différents canaux par exemple, et les retards dynamiques, qui viennent des perturbations atmosphériques par exemple.

Les retards différentiels dus à la propagation atmosphérique (perturbation dynamique) sont très inférieurs à $2000 \times \lambda$, une compensation statique des retards structurels du système (longueurs de fibres, etc...) est suffisante. Par contre, les différences de longueur entre les fibres correspondent à plusieurs milliers voire dizaines de milliers de $\lambda$, et donc il faut les corriger. Mais elles ne bougent pas, donc une compensation statique une fois pour toute est suffisante.

Ainsi dans le cas mono-$\lambda$ l'asservissement ou les boucles de rétroaction sur les phases n'ont pas d'intérêt, une calibration est suffisante.

Lorsque plusieurs longueurs d'onde sont en jeu, la tolérance sur le retard résiduel entre les canaux est drastiquement réduite, puisque la recombinaison est un procédé interférométrique, qui exige une égalisation parfaite des retards pour fonctionner indépendamment de la longueur d'onde (condition d'interférence en lumière blanche).

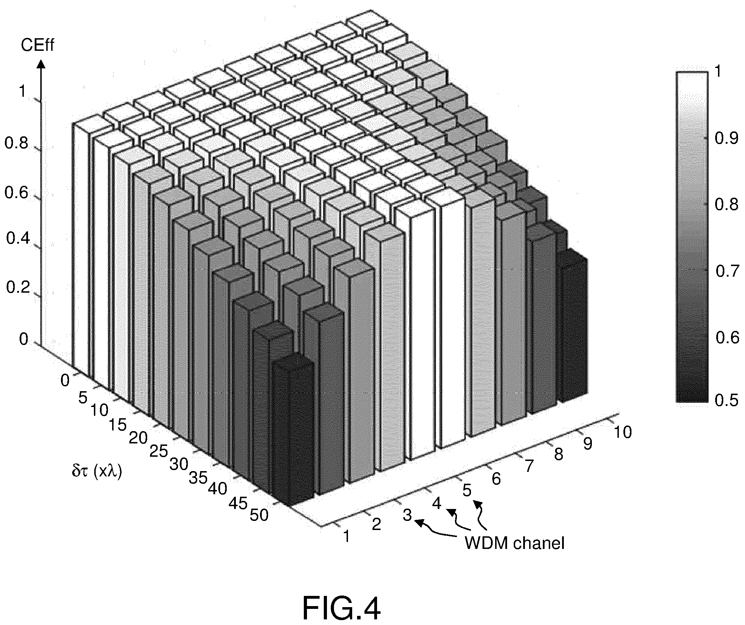

En pratique, cette tolérance dépend de l'étendu du spectre WDM. Ainsi, pour un cas typique de 10 canaux WDM 1 à 10 espacés de 200 GHz, on représente sur la figure 4 l'efficacité de combinaison optimale CEff par canal WDM (obtenue avec une minimisation du signal d'erreur) en fonction de la valeur du retard résiduel $\delta\tau$ exprimé en multiples de $\lambda$, avec $\lambda = 1.55 \ \mu m$ . On voit qu'un retard résiduel $\delta\tau$ de $10 \times \lambda$ conduit à une efficacité de recombinaison moyenne supérieure à 99% (moyenne sur l'ensemble des canaux WDM).

En revanche, lorsque le retard résiduel est de $35 \times \lambda$, l'efficacité de recombinaison moyenne chute à 90% (80% pour les canaux aux extrémités du spectre). Pour obtenir 90% sur l'ensemble du spectre, il faut égaliser les retards à mieux que $20 \times \lambda$. Il est donc nécessaire de corriger de manière dynamique les fluctuations de retard entre les canaux à recombiner, puisque les variations de retard dues à la propagation dans l'atmosphère, aux effets thermiques, mécaniques, ou autres sont typiquement supérieurs à $20\lambda$. Un dispositif de recombinaison dynamique avec correction des retards tels que décrit dans l'invention est alors nécessaire.

Un retard résiduel d'environ $20\lambda$ est compatible de lignes à retard variable réalisées avec des composants usuels tels que des fibres (fibre étirées par un module piezo électrique) ou des miroirs (miroir sur une cale piezzo électrique).

Typiquement une fibre enroulée sur une cale piezo permet de corriger des retards dynamiques: bande passante de 10kHz, 1/20micron ou mieux de précision, et $>100\lambda$ d'excursion.

Le signal reçu par le détecteur de contrôle ne s'annule qu'à l'unique condition que les retards soient exactement compensés (interférence en lumière blanche) et fourni par conséquent un bon signal d'erreur pour un asservissement dynamique.

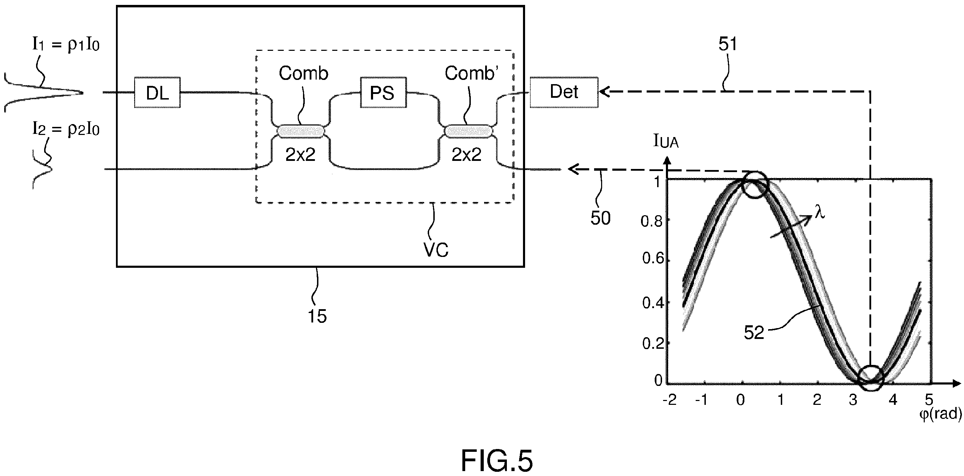

La figure 5 illustre l'intensité I détectée par le détecteur Det en fonction de la phase appliquée par PS et pour chaque canal à l'optimisation, dans le cas d'un retard résiduel de $\delta\tau$ de $10 \times \lambda$ (c'est-à-dire que la ligne à retard DL compense la différence de retard entre les deux voies avec une erreur résiduelle $\delta\tau$ de $10\lambda$). C'est le minium de l'intensité 51 qui permet le réglage de l'asservissement (signal d'erreur $\varepsilon$), alors que le maximum 50 est recueilli en sortie du dispositif. La courbe 52 illustre l'intensité moyennée sur les 10 canaux.

On retrouve bien qu'un retard résiduel de $10\lambda$ est acceptable pour le dispositif.

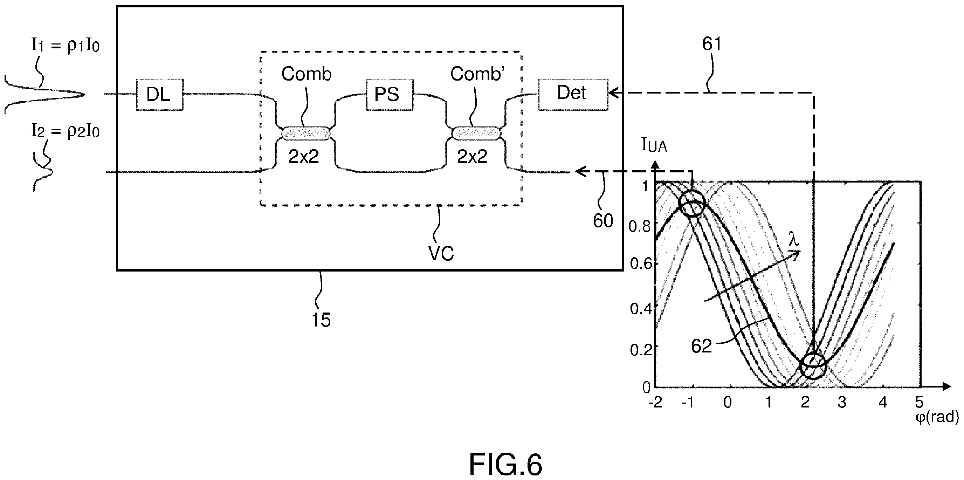

La figure 6 illustre l'intensité I détectée par le détecteur Det pour chaque canal dans le cas d'un retard résiduel $\delta\tau$ de $35 \times \lambda$. Le minium de l'intensité 61 permet le réglage de l'asservissement, alors que le maximum 60 est recueilli en sortie du dispositif. La courbe 62 illustre l'intensité moyennée sur les 10 canaux. L'efficacité de recombinaison a baissé, et on retrouve bien qu'un retard résiduel de $35\lambda$ présente un signal d'erreur dégradé pour le dispositif.

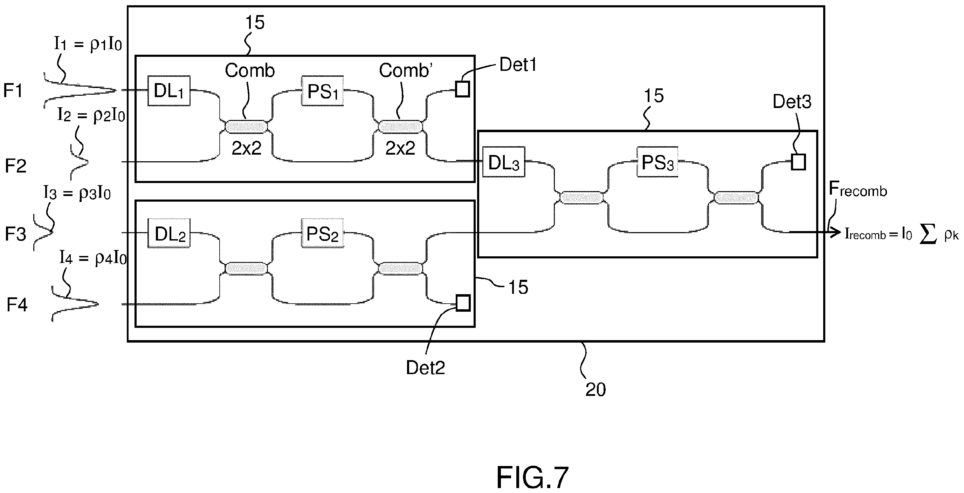

Les dispositifs élémentaires 15 ont vocation à être agencés en cascade de manière à réaliser un dispositif 20 de recombinaison cohérente permettant d'obtenir un faisceau recombiné Frecomb unique, tel qu'illustré figure 7.

On considère que le faisceau incident distordu Fid est échantillonné selon N faisceaux élémentaires F1, F2, FN, N entier paire strictement positif.

La figure 7 illustre un dispositif 20 pour le cas N=4 (aisément généralisable à un nombre plus élevé), constitué de trois dispositifs élémentaire 15. Les faisceaux incidents sont recombinés 2 à 2.

Les lignes à retard variables DL1 et DL2 permettent dans un premier temps d'ajuster les retards optiques (phases absolues) entre les faisceaux F1 et F2 d'une part, et F3 et F4 d'autre part.

Dans un 2ème temps, 2 coupleurs accordables constitués chacun dans cet exemple d'un interféromètre de Mach Zehnder (MZI) avec un déphasage ajustable (PS1 ou PS2), compensent le ratio d'intensité entre 1 et 2 (PS1) et 3 et 4 (PS2).

On place un détecteur d'intensité (Det1, Det2) sur la sortie complémentaire des MZI pour générer un signal d'erreur pour le réglage de DL1/PS1 et DL2/PS2.

On procède de même pour combiner les sorties des 2 MZI, en plaçant une ligne à retard DL3 pour ajuster les retards, suivie d'un nouveau MZI pour combiner et ajuster les rapports d'intensité.

Pour des intensités incidentes $I_k$ valant $I_k = \rho_k I_0$, on obtient en sortie du dispositif un faisceau $F_{recomb}$ présentant une intensité combinée valant $I_{recomb} = I_0 \Sigma \rho_k$ lorsque les signaux sur les détecteurs de contrôle sont nuls.

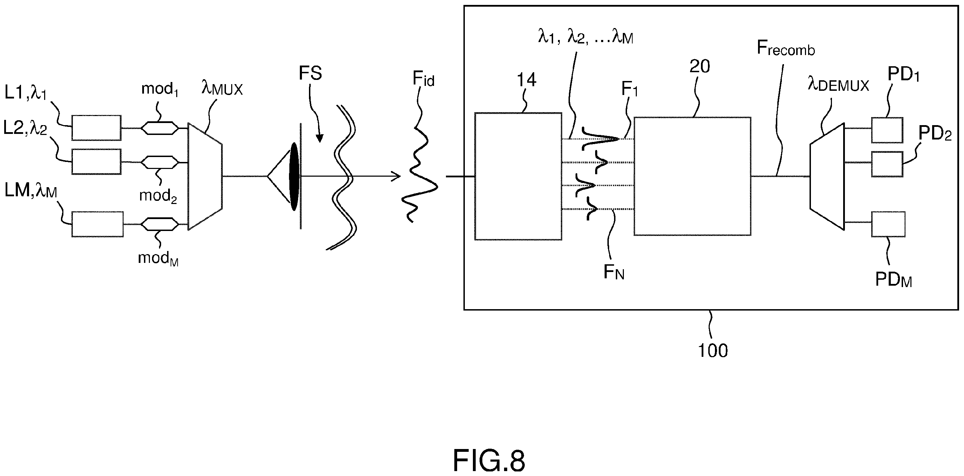

Selon un autre aspect l'invention concerne également un système de réception 100 tel qu'illustré figure 8 utilisant un dispositif 20 selon l'invention. Ce système multi-λ est basé sur la décomposition du front d'onde incident aberrant en une multitude de sous-faisceaux de front d'onde plan (démultiplexage spatial), puis l'utilisation de la technique de combinaison cohérente à l'aide du dispositif 20 pour remettre en phase les sous-faisceaux et maximiser la puissance optique collectée et donc le bilan de liaison, ce quelque soit la longueur d'onde.

Le système de réception 100 de la figure 8 illustre le cas d'une liaison WDM dans lequel à l'émission un faisceau constitué de M longueurs d'onde multiplexées $\lambda_1, \lambda_2, ... \lambda_M$, chacune portant un signal de modulation (modulateurs mod1, mod2 ... et multiplexeur λMUX), est émis en espace libre. Après propagation dans l'atmosphère FS le faisceau présente une amplitude et une phase fortement distordues, formant à la réception le faisceau incident Fid.

Le système 100 comprend tout d'abord un dispositif de démultiplexage spatial 14 du faisceau incident Fid, configuré pour échantillonner Fid en N faisceaux élémentaires. Les faisceaux élémentaires ont des amplitudes et des phases différentes. Préférentiellement ils sont limités par diffraction pour pouvoir les coupler simplement à une fibre monomode ou un circuit photonique intégré.

Plusieurs dispositifs peuvent réaliser la fonction de démultiplexage spatial du faisceau aberrant.

Un premier dispositif de démultiplexage spatial 14 comprend une matrice de microlentilles qui réalise une pixellisation du faisceau incident, en échantillonnant spatialement le faisceau aberrant. Le pas d'échantillonnage spatial (taille des pixels) est choisi de manière à ce que chaque faisceau élémentaire soit limité par diffraction. Une taille de pixel assez petite peut s'avérer nécessaire, et donc un nombre de faisceaux élémentaires important.

Un deuxième dispositif comprend un télescope multi-ouvertures, avec une correction de type tip/tilt sur chaque faisceau élémentaire

Enfin, un troisième dispositif est configuré pour réaliser une décomposition en N modes spatiaux à l'aide de N lames de phase. Considérant que le faisceau aberrant se décompose sur une base de modes spatiaux élevés, les lames de phases sont alors calculées de manière à convertir ces modes élevés en modes Gaussiens par propagation libre et traversée des lames de phase.

Le système de réception 100 comprend également un dispositif 20 de recombinaison cohérente des N faisceaux élémentaires tel que décrit précédemment. Il s'agit ici de compenser les retards optiques et les variations d'amplitudes entre les N faisceaux élémentaires avant de les additionner optiquement (sommation cohérente) et former le faisceau Frecomb. Le dispositif 20 réalise donc la concentration de toute l'énergie optique sur un seul détecteur et permet donc une amélioration du rapport signal/bruit comparé à l'approche incohérente.

Le faisceau somme Frecomb est alors démultiplexé par un dispositif de démultiplexage en longueur d'onde λDEMUX de manière à former M faisceaux à M longueur d'ondes constituant chacun un canal de transport de l'information. Puis les M faisceaux sont envoyés chacun vers M détecteurs $PD_1, PD_2, ... PD_M$ (pour M canaux WDM).

On a ainsi réalisé un système de réception à recombinaison cohérente présentant une très bonne efficacité de recombinaison sur une large bande spectrale ou peigne de fréquences (architecture WDM).

Par ailleurs un tel système est compatible de technologies photoniques intégrées, en intégrant sur une puce photonique les fonctions de commutateurs 2x2, incluant les récepteurs de contrôle (détecteurs), et éventuellement les récepteurs WDM, avec démultiplexeur (« plannar phase array » ou MZI asymétriques cascadés par exmeple).

Une réalisation de type photonique intégrée rend le système plus simple et moins couteux qu'une approche de type optique adaptative.

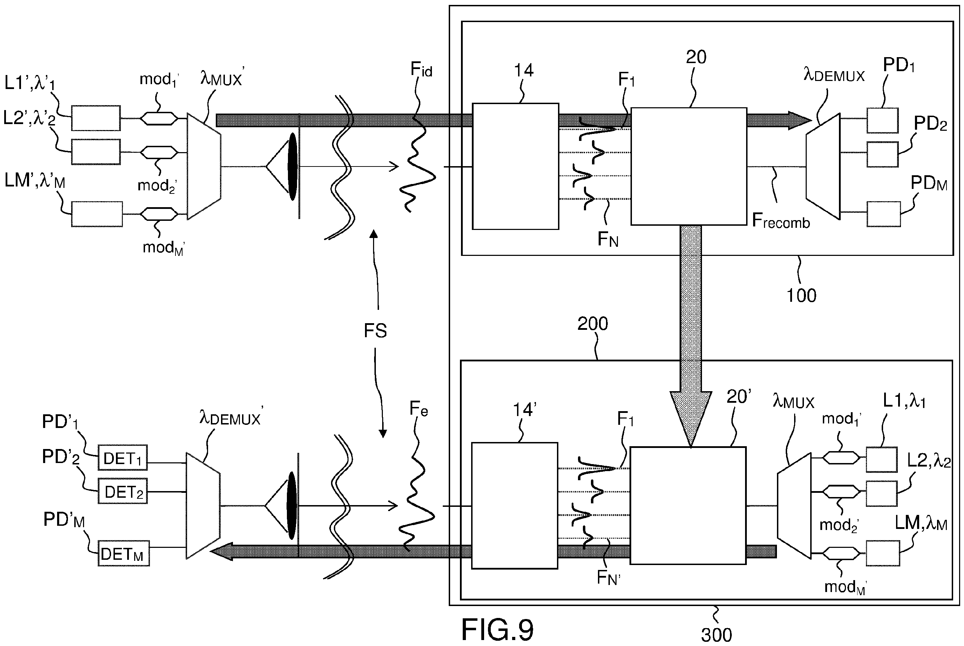

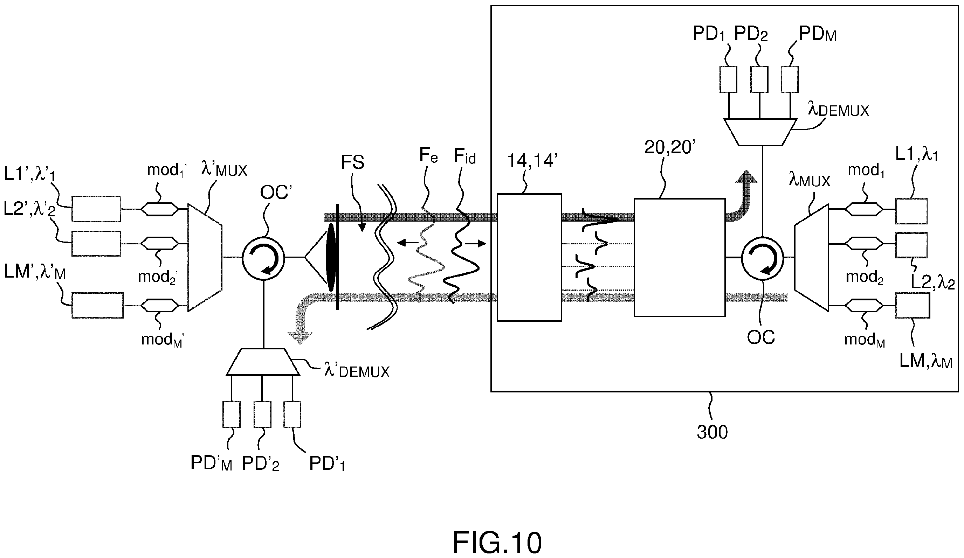

Selon un autre aspect l'invention concerne également un système de réception/émission 300 comprenant un système de réception 100 tel que décrit précédemment et un système d'émission 200 selon deux modes de réalisation illustrés figures 9 et 10.

Le système d'émission comprend M sources lasers $L_1, L_2, ... L_M$ et M modulateurs associés $mod_1, mod_2, ... mod_M$ configurés pour générer M faisceaux à M longueurs d'onde, chaque faisceau constotuant un canal de transport de l'information et un dispositif de multiplexage en longueur d'onde λMUX de manière à former un faisceau multi-longueur d'onde.

Le système 200 comprend également un dispositif de séparation cohérente 20' du faisceau multi-longueur d'onde en N faisceaux élémentaires d'émission $F_1', F_2', ... F_N'$ sensiblement identique au dispositif de recombinaison cohérente 20, mais utilisé en sens inverse et de sorte que chaque ligne à retard et chaque modulateur de phase applique respectivement le retard et la différence de phase opposé de ceux déterminés par chaque boucle d'asservissement du dispositif de recombinaison cohérente 20 du système de réception 100, de manière à ce que les N faisceaux élémentaires d'émission $F_1', ... F_N'$ correspondent respectivement aux N faisceaux conjugués des N faisceaux élémentaires initiaux.

Enfin le système 200 comprend un dispositif de multiplexage spatial 14' sensiblement identique au dispositif de démultiplexage spatial 14 mais utilisé en sens inverse de manière à transformer les N faisceaux élémentaires d'émission F1', ... FN' en un faisceau émis Fe correspondant au faisceau conjugué du faisceau incident Fid, de manière à pré-compenser la distorsion. En d'autres termes les pondérations d'amplitude et de retard déterminées pour la combinaison cohérente en réception sont ici utilisées pour appliquer sur les N faisceaux élémentaires d'émission la loi de pondération qui permettra de pré-compenser la perturbation atmosphérique en sens inverse.

Dans le mode de réalisation de la figure 9 les systèmes 100 et 200 sont réalisés avec des dispositifs 20/20' et 14/14' différents.

Dans le mode de réalisation de la figure 10 le dispositif 20 de recombinaison cohérente et le dispositif 20' de séparation cohérente sont confondus et le dispositif de démultiplexage spatial 14 et le dispositif de multiplexage spatial 14' sont confondus.

Le dispositif de démultiplexage en longueur d'onde (λDEMUX et les M détecteurs PD$_1$, PD$_2$, PD$_M$ d'une part, et les M sources lasers (L$_1$, L$_2$, ...L$_M$), les M modulateurs associés mod$_1$, mod$_2$, mod$_M$ et le dispositif de multiplexage en longueur d'onde λMUX d'autre part, sont alors couplés au dispositif de recombinaison/séparation cohérente par un circulateur OC.

En principe, le système 200 fonctionne en bidirectionnel, c'est à dire émission et réception en même temps. Cependant au niveau du composant, l'émission est beaucoup plus intense que la réception, alors que la configuration du dispositif se fait sur l'optimisation du signal en réception. Il est alors possible que des réflexions parasites de l'émission perturbent l'optimisation de la réception et donc le réglage du composant. Auquel cas, on fait fonctionner le système en alternant émission/réception.

**Revendications**

1. Dispositif de démultiplexage spatial d'un faisceau optique incident (Fid) et de recombinaison cohérente de N faisceaux élémentaires (F$_1$, F$_2$, ..F$_N$) issus de l'échantillonnage dudit faisceau incident (Fid) ayant subi une distorsion, le spectre dudit faisceau incident comprenant M longueurs d'ondes (λ$_1$, λ$_2$,..λ$_M$) constituant chacune un canal de transport d'une information, le dispositif comprenant :

   - un dispositif de démultiplexage spatial (14) du faisceau incident (Fid) configuré pour échantillonner ledit faisceau incident en N faisceaux élémentaires (F$_1$, F$_2$, ..F$_N$),
   - un dispositif (20) de recombinaison cohérente des N faisceaux élémentaires, N entier paire strictement positif, comprenant une pluralité de dispositifs élémentaires (15) agencés en cascade de manière à obtenir un faisceau recombiné (Frecomb) unique,

   un dispositif élémentaire de recombinaison cohérente (15) recombinant un premier (F1) et un deuxième faisceaux élémentaires (F2) ladite distorsion ayant induit un retard (R$_{12}$) entre lesdits premier et deuxième faisceaux élémentaires, le dispositif élémentaire comprenant :

   - une première (Input1) et une deuxième (Input2) entrée dans lesquelles sont respectivement injectés le premier (F1) et le deuxième (F2) faisceau élémentaires à recombiner,
   - une sortie (Out) délivrant un faisceau de sortie correspondant à la recombinaison cohérente du premier et du deuxième faisceau élémentaire,
   - une ligne à retard (DL) disposée sur un des trajets desdits faisceaux élémentaires et configurée pour induire un retard variable sur ledit trajet,
   - un coupleur variable (VC) comprenant un premier combineur 2x2 (Comb), un modulateur de phase (PS) disposé sur une des deux sorties du

      premier combineur et un deuxième combineur 2x2 (Comb'),
      le deuxième combineur présentant une sortie principale constituant la sortie (Out) du dispositif élémentaire (15) et délivrant ledit faisceau de sortie et une sortie complémentaire (Sc) délivrant un faisceau complémentaire du faisceau de sortie,

   - un détecteur de contrôle (Det) relié à la sortie complémentaire (Sc) configuré pour générer un signal d'erreur (ε) à partir du faisceau complémentaire qui s'annule lorsque le modulateur de phase (PS) est configuré appliquer une différence de phase qui égalise l'intensité du premier et du deuxième faisceau élémentaire, et lorsque la ligne à retard (DL) est configurée pour appliquer un retard qui compense ledit retard (R$_{12}$) entre lesdits premier et deuxième faisceau élémentaire,
   - une boucle d'asservissement (BA) configurée pour déterminer, à partir du signal d'erreur, le retard et la différence de phase à appliquer.

**2.** Système de réception (100) comprenant :

- un dispositif de démultiplexage spatial (14) selon la revendication 1, -un dispositif (20) de recombinaison cohérente des N faisceaux élémentaires selon la revendication1,
- un dispositif de démultiplexage en longueur d'onde (ÀDEMUX) de manière à former M faisceaux à M longueur d'ondes constituant chacun un canal de transport de l'information,
- M détecteurs ($PD_1$, $PD_2$, $PD_M$) associés auxdits M faisceaux.

**3.** Système de réception selon la revendication 2 dans lequel les faisceaux élémentaires sont limités par diffraction.

**4.** Système de réception selon la revendication 2 dans lequel le dispositif de démultiplexage spatial (14) comprend une matrice de microlentilles configurée pour échantillonner spatialement le faisceau incident.

**5.** Système de réception selon la revendication 2 dans lequel le dispositif de démultiplexage spatial (14) comprend un télescope multi-ouvertures.

**6.** Système de réception selon la revendication 2 dans lequel le dispositif de démultiplexage spatial (14) comprend N lames de phases configurées pour réaliser une décomposition en N modes spatiaux.

**7.** Système de réception/émission (300) comprenant un système de réception (100) selon l'une des revendications 2 à 6 et un système d'émission (200) comprenant :

- M sources lasers ($L_1$, $L_2$, ...$L_M$) et M modulateurs associés ($mod_1$, $mod_2$, $mod_M$) configuré pour générer M faisceaux à M longueurs d'onde,
- un dispositif de multiplexage en longueur d'onde ($\lambda$MUX) de manière à former un faisceau multi-longueur d'onde,
- un dispositif de séparation cohérente (20') du faisceau multi-longueur d'onde en N faisceaux élémentaires d'émission ($F'_1$, $F'_2$, ..$F'_N$) sensiblement identique au dispositif de recombinaison cohérente (20) selon la revendication 2, mais utilisé en sens inverse et de sorte que chaque ligne à retard et chaque modulateur de phase applique respectivement le retard et la différence de phase opposé de ceux déterminés par chaque boucle d'asservissement du dispositif de recombinaison cohérente (20) du système de réception (100), de manière à ce que les N faisceaux élémentaires d'émission ($F_1'$,...$F_N'$) correspondent respectivement aux N faisceaux conjugués des N faisceaux élémentaires initiaux,
- un dispositif de multiplexage spatial (14') sensiblement identique au dispositif de démultiplexage spatial (14) mais utilisé en sens inverse de manière à transformer les N faisceaux élémentaires d'émission (F1',...FN') en un faisceau émis (Fe) correspondant au faisceau conjugué du faisceau incident (Fid), de manière à pré-compenser ladite distorsion.

**8.** Système de réception/émission selon la revendication précédente, dans lequel :

- le dispositif (20) de recombinaison cohérente et le dispositif (20') de séparation cohérente sont confondus,
- le dispositif de démultiplexage spatial (14) et le dispositif de multiplexage spatial (14') sont confondus,
- le dispositif de démultiplexage en longueur d'onde ($\lambda$DEMUX) et les M détecteurs ($PD_1$, $PD_2$, $PD_M$) d'une part, et les M sources lasers ($L_1$, $L_2$, ...$L_M$), les M modulateurs associés ($mod_1$, $mod_2$, $mod_M$) et le dispositif de multiplexage en longueur d'onde ($\lambda$MUX) d'autre part, sont couplés au dispositif de recombinaison/séparation cohérente par un circulateur (OC),

le système étant en outre configuré pour être mis en oeuvre tantôt en réception tantôt en émission.

**Patentansprüche**

**1.** Vorrichtung zum räumlichen Demultiplexen eines einfallenden optischen Strahls (Fid) und zum kohärenten Rekombinieren von N Elementarstrahlen ($F_1$, $F_2$, ..$F_N$) aus der Abtastung des einfallenden Strahls (Fid), der eine Verzerrung erfahren hat, wobei das Spektrum des einfallenden Strahls M Wellenlängen ($\lambda_1$, $\lambda_2$, .. $\lambda_M$) umfasst, die jeweils einen Kanal für den Transport einer Information bilden, wobei die Vorrichtung Folgendes umfasst:

- eine Vorrichtung (14) zum räumlichen Demultiplexen des einfallenden Strahls (Fid), konfiguriert zum Abtasten des einfallenden Strahls in N Elementarstrahlen ($F_1$, $F_2$, ..$F_N$),
- eine Vorrichtung (20) zum kohärenten Rekombinieren der N Elementarstrahlen, wobei N eine gerade, streng positive ganze Zahl ist, umfassend eine Mehrzahl von elementaren Vorrichtungen (15), die in Kaskade angeordnet sind, um einen einzigen rekombinierten Strahl (Frecomb) zu erhalten,

eine elementare kohärente Rekombinationsvorrichtung (15), die einen ersten (F1) und einen zweiten (F2) Elementarstrahl rekombiniert, wobei die Verzerrung eine Verzögerung ($R_{12}$) zwischen dem ersten und dem zweiten Elementarstrahl induziert hat, wobei die elementare Vorrichtung Folgendes umfasst:

- einen ersten (Input1) und einen zweiten (Input2) Eingang, in die jeweils der erste (F1) und der zweite (F2) zu rekombinierende Elementarstrahl eingespeist werden,
- einen Ausgang (Out), der einen Ausgangsstrahl liefert, der der kohärenten Rekombination des ersten und des zweiten Elementarstrahls entspricht,
- eine Verzögerungsleitung (DL), die auf einer der Bahnen der Elementarstrahlen angeordnet und zum Induzieren einer variablen Verzögerung auf der Bahn konfiguriert ist,
- einen variablen Koppler (VC) mit einem ersten 2x2-Kombinierer (Comb), einem an einem der beiden Ausgänge des ersten Kombinierers angeordneten Phasenmodulator (PS) und einem zweiten 2x2-Kombinierer (Comb'), wobei der zweite Kombinierer einen Hauptausgang, der den Ausgang (Out) der elementaren Vorrichtung (15) bildet und den Ausgangsstrahl liefert, sowie einen komplementären Ausgang (Sc) aufweist, der einen Komplementärstrahl des Ausgangsstrahls liefert,
- einen Kontrolldetektor (Det), der mit dem komplementären Ausgang (Sc) verbunden ist, konfiguriert zum Erzeugen eines Fehlersignals ($\varepsilon$) auf der Basis des Komplementärstrahls, das gestoppt wird, wenn der Phasenmodulator (PS) zum Anwenden einer Phasendifferenz konfiguriert ist, die die Intensität des ersten und des zweiten Elementarstrahls ausgleicht, und wenn die Verzögerungsleitung (DL) zum Anwenden einer Verzögerung konfiguriert ist, die die Verzögerung ($R_{12}$) zwischen dem ersten und dem zweiten Elementarstrahl kompensiert,
- eine Regelschleife (BA), die zum Bestimmen der anzuwendenden Verzögerung und Phasendifferenz auf der Basis des Fehlersignals konfiguriert ist.

2. Empfangssystem (100), das Folgendes umfasst:

- eine räumliche Demultiplexvorrichtung (14) nach Anspruch 1,
- eine Vorrichtung (20) zum kohärenten Rekombinieren der N Elementarstrahlen nach Anspruch 1,
- eine Wellenlängen-Demultiplexvorrichtung ($\lambda$DEMUX), um M Strahlen mit M Wellenlängen zu bilden, die jeweils einen Kanal für den Transport der Information bilden,
- M Detektoren ($PD_1$, $PD_2$, $PD_M$), die mit den M Strahlen assoziiert sind.

3. Empfangssystem nach Anspruch 2, wobei die Elementarstrahlen durch Beugung begrenzt sind.

4. Empfangssystem nach Anspruch 2, wobei die räumliche Demultiplexvorrichtung (14) ein Mikrolinsenarray umfasst, das zum räumlichen Abtasten des einfallenden Strahls konfiguriert ist.

5. Empfangssystem nach Anspruch 2, wobei die räumliche Demultiplexvorrichtung (14) ein Teleskop mit mehreren Öffnungen umfasst.

6. Empfangssystem nach Anspruch 2, wobei die räumliche Demultiplexvorrichtung (14) N Phasenplatten umfasst, die zum Durchführen einer Zerlegung in N räumliche Moden konfiguriert sind.

7. Empfangs-/Sendesystem (300), das ein Empfangssystem (100) nach einem der Anspruche 2 bis 6 und ein Sendesystem (200) umfasst, das Folgendes umfasst:

- M Laserquellen ($L_1$, $L_2$, ...$L_M$) und M assoziierte Modulatoren ($mod_1$, $mod_2$, $mod_M$), die zum Erzeugen von M Strahlen mit M Wellenlängen konfiguriert sind,
- eine Wellenlängen-Multiplexvorrichtung ($\lambda$MUX), um einen Strahl mit mehreren Wellenlängen zu bilden,
- eine Vorrichtung (20') zum kohärenten Trennen des Strahls mit mehreren Wellenlängen in N elementare Sendestrahlen ($F'_1$, $F'_2$, ... $F'_N$), die mit der Vorrichtung (20) zum kohärenten Rekombinieren nach Anspruch 2 im Wesentlichen identisch ist, aber in umgekehrter Richtung und so verwendet wird, dass jede Verzögerungsleitung und jeder Phasenmodulator jeweils die Verzögerung und die Phasendifferenz anwendet, die den von jeder Regelschleife der Vorrichtung (20) zum kohärenten Rekombinieren des Empfangssystems (100) bestimmten entgegengesetzt sind, so dass die N elementaren Sendestrahlen ($F_1'$, ..., $F_N'$) jeweils den N konjugierten Strahlen der N elementaren Anfangsstrahlen entsprechen,

- eine räumliche Multiplexvorrichtung (14'), die mit der räumlichen Demultiplexvorrichtung (14) im Wesentlichen identisch ist, jedoch in umgekehrter Richtung verwendet wird, um die N elementaren Sendestrahlen ($F_1'$,...$F_N'$) in einen gesendeten Strahl (Fe) umzuwandeln, der dem konjugierten Strahl des einfallenden Strahls (Fid) entspricht, um die Verzerrung vorzukompensieren.

8. Empfangs-/Sendesystem nach dem vorherigen Anspruch, wobei:

- die Vorrichtung (20) zum kohärenten Rekombinieren und die Vorrichtung (20') zum koherenten Trennen zusammenfallen,
- die räumliche Demultiplexvorrichtung (14) und die räumliche Multiplexvorrichtung (14') zusammenfallen,
- die Wellenlängen-Demultiplexvorrichtung ($\lambda$DEMUX) und die M Detektoren ($PD_1$, $PD_2$, $PD_M$) einerseits und die M Laserquellen ($L_1$, $L_2$, ...$L_M$), die assoziierten M Modulatoren ($mod_1$, $mod_2$, $mod_M$) und die Wellenlängen-Multiplexvorrichtung ($\lambda$MUX) andererseits durch einen Zirkulator (OC) an der kohärenten Rekombinations-/Trennvorrichtung gekoppelt sind,

wobei das System ferner konfiguriert ist, sowohl im Empfangs- als auch im Sendebetrieb ausgeführt zu werden.

## Claims

1. Device for spatial demultiplexing of an incident optical beam (Fid) and for coherent recombination of N elementary beams ($F_1$, $F_2$, ..$F_N$) from the resampling of said incident beam (Fid) having undergone a distortion, the spectrum of said incident beam comprising M wavelengths ($\lambda_1$, $\lambda_2$,...$\lambda_M$) each constituting a channel for conveying a piece of information, the device comprising:

- a device (14) for spatially demultiplexing the incident beam (Fid) configured to sample said incident beam in N elementary beams ($F_1$, $F_2$, ..$F_N$),
- a device (20) for coherently recombining the N elementary beams, N being a strictly positive even integer number, comprising a plurality of elementary devices (15) arranged in cascade so as to obtain a single recombinant beam (Frecomb),

an elementary device for coherent recombination (15) recombining a first (F1) and a second elementary beam (F2), said distortion having induced a delay ($R_{12}$) between said first and second elementary beams, the elementary device comprising:

- a first input (Input1) and a second input (Input2) into which are respectively injected the first (F1) and the second (F2) elementary beam to be recombined,
- an output (Out) delivering an output beam corresponding to the coherent recombination of the first and of the second elementary beam,
- a delay line (DL) placed on one of the paths of said elementary beams and configured to induce a variable delay on said path,
- a variable coupler (VC) comprising a first 2x2 combiner (Comb), a phase modulator (PS) placed on one of the two outputs of the first combiner and a second 2x2 combiner (Comb'),
the second combiner having a main output that forms the output (Out) of the elementary device (15) and that delivers said output beam and a complementary output (Sc) that delivers a beam that is complementary to the output beam,
- a control detector (Det) connected to the complementary output (Sc) configured to generate, from the complementary beam, an error signal ($\epsilon$) which is canceled when the phase modulator (PS) is configured to apply a phase difference that equalizes the intensities of the first and second elementary beams, and when the delay line (DL) is configured to apply a delay that compensates for said delay ($R_{12}$) between said first and second elementary beams,
- a control loop (BA) configured to determine, from the error signal, the delay and the phase difference to be applied.

2. Receiving system (100) comprising:

- a device (14) for spatially demultiplexing according to claim 1,
- a device (20) for coherently recombining the N elementary beams according to claim 1,
- a device ($\lambda$DEMUX) for wavelength demultiplexing so as to form M beams at M wavelengths each forming one channel for conveying the piece of information,
- M detectors ($PD_1$, $PD_2$, $PD_M$) associated with said M beams.

3. Receiving system according to claim 2, wherein the elementary beams are diffraction limited.

4. Receiving system according to claim 2, wherein the spatial demultiplexing device (14) comprises a matrix array of micro-lenses that is configured to spatially sample the incident beam.

5. Receiving system according to claim 2, wherein the spatial demultiplexing device (14) comprises a multi-aperture telescope.

6. Receiving system according to claim 2, wherein the spatial demultiplexing device (14) comprises N phase plates configured to carry out a decomposition into N spatial modes.

7. Receiving/emitting system (300) comprising a reception system (100) according to one of claims 2 to 6 and an emitting system (200), comprising:

- M laser sources ($L_1$, $L_2$, ... $L_M$) and M associated modulators ($mod_1$, $mod_2$, $mod_M$) configured to generate M beams at M wavelengths,
- a device ($\lambda$MUX) for wavelength multiplexing so as to form a multi-wavelength beam,
- a device for coherently splitting (20') the multi-wavelength beam into N elementary emission beams ($F'_1$, $F'_2$, ..$F'_N$) which is substantially identical to the coherently recombining device (20) according to claim 2, but used in the reverse direction and so that each delay line and each phase modulator respectively applies the opposite delay and the opposite phase difference to those determined by each control loop of the coherently recombining device (20) of the receiving system (100), so that the N elementary emission beams ($F_1'$, ... $F_N'$) respectively correspond to N beams that are conjugates of the N initial elementary beams,
- a spatially multiplexing device (14') that is substantially identical to the spatially demultiplexing device (14) but used in inverse direction so as to convert the N elementary emission beams (F1', ... FN') into an emitted beam (Fe) corresponding to the conjugate beam of the incident beam (Fid), so as to pre-compensate for said distortion.

8. Receiving/emitting system according to the preceding claim, wherein:

- the coherent recombining device (20) and the coherently splitting device (20') are one and the same,
- the spatially demultiplexing device (14) and the spatially multiplexing device (14') are one and the same,
- the wavelength demultiplexing device ($\lambda$DEMUX) and the M detectors ($PD_1$, $PD_2$, $PD_M$) on the one hand, and the M laser sources ($L_1$, $L_2$, ... $L_M$), the M associated modulators ($mod_1$, $mod_2$, $mod_M$) and the wavelength multiplexing device ($\lambda$MUX) on the other hand, are coupled to the coherently recombining/splitting device by a circulator (OC),

the system being further configured to be used to alternately receive and emit.

10

16

15

16a

15a

16b

15b

16C

15C

16d

15d

16e

15e

16f

15f

FIG.1

$E_0 e^{-i\omega t}$

T2, $d_2$

S

D

T1, $d_1$

T1 : $E_1 = E_0 e^{-i\omega(t-\tau_1)}$

T2 : $E_2 = E_0 e^{-i\omega(t-\tau_2)}$

$\tau_1 = \dfrac{n.d_1}{c}$

$\tau_2 = \dfrac{n.d_2}{c}$

FIG.2

EP 3 672 109 B1

FIG.3

FIG.4

FIG.5

FIG.6

FIG.7

FIG.8

FIG.9

EP 3 672 109 B1

FIG.10

**EP 3 672 109 B1**

## RÉFÉRENCES CITÉES DANS LA DESCRIPTION

### Documents brevets cités dans la description

- US 7974543 B